# EUROPÄISCHE PATENTSCHRIFT

(11) **EP 1 484 372 B1**
(45) Veröffentlichungstag und Bekanntmachung des Hinweises auf die Patenterteilung: **20.03.2013**
(21) Anmeldenummer: 04013243.3
(22) Anmeldetag: 04.06.2004
(51) Int. Cl.: B05D 5/08, C09D 183/04

(54) **Beschichtete Aluminiumfolie und Verfahren zu deren Herstellung**
Coated aluminium foil and process of producing same
Feuille d'aluminium revêtue et procédé pour sa fabrication

(30) Priorität: 05.06.2003 DE 20308885 U
(43) Veröffentlichungstag der Anmeldung: 08.12.2004
(73) Patentinhaber: Cofresco Frischhalteprodukte GmbH & Co. KG, 32427 Minden (DE); Nano-X GmbH, 66130 Saarbrücken (DE)
(72) Erfinder: Arning, Hans-Jürgen, Dr., 32312 Lübbecke (DE); Sepeur, Stefan, Dr. rer. nat.,, 66787 Wadgassen (DE); Gross, Frank, Dr. Ing.,, 66663 Merzig (DE)
(74) Vertreter: Dantz, Jan Henning

(56) Entgegenhaltungen:
- EP-A- 1 201 721
- WO-A-00/59555
- DE-A- 10 004 132
- US-A- 4 439 239
- US-A- 5 514 211
- US-B1- 6 403 164

## Beschreibung

Die vorliegende Erfindung betrifft eine Aluminiumfolie.

Die US 4,439,239 offenbart eine pigmenthaltige Beschichtungszusammensetzung mit Wasser, Alkohol, einer Mischung aus einem hydrolysierbaren Trialkoxysilan und einem hydrolysierbaren Dilakoxysilan und einem Ansäuerungsmittel. Durch eine derartige Beschichtung kann eine Porzellanschicht ersetzt werden.

Die EP 1 201 721 A1 offenbart eine Beschichtung mit einer Komponente A, welche ein Silicon-Oligomer aufweist und einer Komponente B, mit einem Katalysator. Die Beschichtung wird in verschiedenen Ausführungsbeispielen als Film auf ein Glass-Substrat aufgetragen.

Die WO 00/59555 offenbart ein Haushaltsgerät mit einer Beschichtung aufweist. Die Beschichtungsmasse umfasst ein Polykondensat aus einem oder mehreren Silanen, einem oder mehreren Verbindungen von glasbildenen Elementen und Teilchen von Übergangsmetalloxiden.

Es gibt Beschichtungsmaterialen, die ein Bindemittel und mindestens einen Pigmentstoff umfassen, die für den Temperaturbereich bis 700 ° C eingesetzt werden. Diese Beschichtungsmaterialen verwenden Methylszliconharze, Methylphenylsiliconharze oder Phenylsiliconharze. Diese werden mit Russ oder anorganischen Farbpigmenten (Eisenoxidschwarz und andere) gefärbt und für Auspufflackierungen, Grills, Waffeleisenbeschichtungen u.s.w. eingesetzt. Dabei können auch andersfarbige Pigmente verwendet werden. Im Falle von Phenylsiliconharzen besteht der Nachteil, dass beim Verbrennen benzolhaltige giftige Derivate entstehen. Damit sind diese Beschichtungen zwar für hohe Temperaturen, aber nicht für offene Flammen bzw. für den Lebensmittelbereich geeignet. Im Falle von reinen Methylsiliconharzen erfolgt eine thermische Degradation ab 250° C. Eine Komplettverdichtung wird erst ab 400° C erreicht, sodass im ofen- und grillüblichnen Temperaturbereich von 200 bis 400° C keine haltbaren Schichten erreicht werden können.

Es ist daher Aufgabe der vorliegenden Erfindung eine Aluminiumfolie zu schaffen, die für hohe Temperaturen und auch im Lebensmittelbereich einsetzbar sind.

Diese Aufgabe wird mit einer Aluminiumfolie mit den Merkmalen des Anspruches 1 gelöst

Dabei wird ein Beschichtungsmaterial bereitgestellt, mit einem Bindemittel und mindestens einem Füllstoff, das auf eine Aluminiumfolie auftragbar ist, wobei das Bindemittel mindestens ein Siloxan mit einem organischen Restanteil von weniger als 25 Gew% aufweist. Das Siloxan oder die Siloxane können dabei drei- und/oder vierfach vernetzbar sein, so dass der Füllstoff, z.B. Russ, in einem Matrixsystem verglast wird, und eine Degradation des Füllstoffes nicht in dem für Lebensmittel relevanten Temperaturbereich erfolgt. Insbesondere in dem für Grilltemperaturen üblichen Temperaturbereich zwischen 200 bis 400° C lässt sich das Beschichtungsmaterial somit auch im Lebensmittelbereich einsetzen, also als Beschichtung für eine Aluminiumfolie vorgesehen werden.

Vorzugsweise weist das Beschichtungsmaterial zusätzlich Kondensationskatalysatoren, wie Alkoxide, Salze oder Nanopartikel von Aluminium, Zirkon, Titan usw. auf. Diese liegen dann in der Matrix bevorzugt in oxidischer Form vor.

Die Beschichtung weist vorzugsweise eine Dicke zwischen 100 nm und 5 µm, insbesondere zwischen 250 nm und 3 µm auf. Durch die relativ dünne Ausbildung des Beschichtungsmaterials lässt sich dieses gut auf eine Aluminiumfolie aufbringen, wobei die Umformeigenschaften der Folie nicht beeinträchtigt werden. Die Beschichtung kann dann zusammen mit der Folie gefaltet werden, ohne dass sie abplatzt. Die erfindungsgemäße Aluminiumfolie mit der Beschichtung lässt sich gut zum Garen von Lebensmitteln einsetzen, da die Beschichtung hitzebeständig und lebensmitteltauglich ist. Ferner kann die Verbindung zwischen Aluminiumfolie und Beschichtung so ausgestaltet sein, dass eine gute Abriebfestigkeit bei Kontakt mit Wasser, Öl, Fett oder Essig vorhanden ist.

Für das erfindungsgemäße Herstellungsverfahren für die Aluminiumfolie wird zunächst das Beschichtungsmaterials aufgetragen und in einem weiteren Schritt die Aluminiumfolie mit dem Beschichtungsmaterial auf eine Temperatur von mindestens 180 °C, vorzugsweise etwa 220 °C erhitzt und dadurch das Beschichtungsmaterial ausgehärtet.

Für einen ökonomischen Schichtauftrag sind dabei hohe Bandgeschwindigkeiten von beispielsweise 40 m/min und damit kurze Trocknungszeiten nötig, weshalb die eingesetzten Lösungsmittel sehr leicht flüchtig sein müssen, damit Lösungsmittelreste in der schwarzen Schicht nicht bei einem späteren Gebrauch zum Beispiel im Backofen abdampfen. Daher werden dem Beschichtungsmaterial vorzugsweise die Lösungsmittel Ethanol und Isopropanol eingesetzt, da diese einen guten Verlauf auf dem Metallsubstrat zeigen und einen niedrigen Siedepunkt von 78°C bzw. 82°C aufweisen.

Wird dagegen als Lösungsmittel Butylglykol verwendet, so härtet die Schicht unter gleichen Applikationsbedingungen nicht vollständig durch. Es bleiben nicht wahrnehmbare Reste von Butylglykol in der Beschichtung und die Haftung der Beschichtung auf dem Aluminium verschlechtert sich und damit auch die Eigenschaften der Knitterbeständigkeit und der Tiefziehfähigkeit.

Die Erfindung wird nachfolgend anhand mehrerer Ausführungsbeispiele im Detail erläutert.

Ein Beschichtungsmaterial wird jeweils nachfolgend aus folgenden Bestandteilen hergestellt:
a. Zu 8,9 g (0,05 Mol) Methyltriethoxysilan (MTEOS) und 10,40 g (0,05 Mol) Tetraethoxysilan TEOS werden 10,89 g 1% H₂SO₄ zugegeben und 1 h bei Raumtemperatur (RT) mit 700 U/min gerührt. Es wird mit 38,5 g Isopropanol auf 10% Feststoff verdünnt. Zu dem Bindemittel werden zur Schwarzfärbung 2,02 g Farbruss FW200 gegeben und 10 min in einem Homogenisator, z.B. im Ultraturrax® bei Stufe 3 (16000 rpm) eindispergiert.
b. Zu 20,80 g (0,1 Mol) Tetraethoxysilan (TEOS) werden 14,54 g 1 % H₂SO₄ zugegeben und 1 h bei Raumtemperatur (RT) mit 700 U/min gerührt. Es wird mit 24,73 g Isopropanol auf 10% Feststoff verdünnt. Zu dem Bindemittel werden zur Schwarzfärbung 1,80 g Farbruss FW200 gegeben und 10 min in einem Homogenisator, z.B. im Ultraturrax® bei Stufe 3 (16000 rpm) eindispergiert.
c. Zu 20,80 g (0,1 Mol) Tetraethoxysilan (TEOS) werden 14,54 g 1% H₂SO₄ zugegeben und 1 h bei Raumtemperatur (RT) mit 700 U/min gerührt. Es wird mit 24,73 g Isopropanol auf 10% Feststoff verdünnt. Als Katalysator werden werden 1g 10% ige Zirkonacetatlösung zugesetzt. Zu dem Bindemittel werden zur Schwarzfärbung 1,80 g Farbruss FW200 gegeben und 10 min in einem Homogenisator, z.B. im Ultraturrax® bei Stufe 3 (16000 rpm) eindispergiert.
d. Zu 17,80g (0,1 Mol) Methyltriethoxysilan (MTEOS) werden 10,89g 1% H₂SO₄ zugegeben und 1 h bei Raumtemperatur (RT) mit 700 U/min gerührt. Es wird mit 24,73 g Isopropanol auf 10% Feststoff verdünnt. Als Katalysator werden werden 1g 10% ige Zirkonacetatlösung zugesetzt. Zu dem Bindemittel werden zur Schwarzfärbung 2,02g Farbruss FW200 gegeben und 10 min in einem Homogenisator, z.B. im Ultraturrax® bei Stufe 3 (16000 rpm) eindispergiert.

Das so erhaltene Beschichtungsmaterial wird anschließend jeweils weiterverarbeitet.

Abhängig vom Feststoffgehalt wird ein Rakel-Walzenauftrag oder reiner Walzenauftrag auf den zu beschichtenden Gegenstand, durchgeführt. Es ist auch möglich, eine Beschichtung durch Sprühen, Tauchen oder ein anderes Verfahren durchzuführen.

Mit den obigen Beispielen a) und b) wird für eine 10 µm Nassfilmdicke ein 10 mm Rakel eingesetzt und bei einer Soldichte von 0,8 g/cm3 (IPA) und 2,2 g/cm3 für ein amorphes SiO₂-Gerüst erhält man dann eine Trockenschichtdicke von etwa 300 bis 400 nm. Der Schichtdickenbereich kann zwischen 100 nm und 5 µm, bevorzugt zwischen 250 nm und 3 µm liegen.

Die Beschichtung wird auf eine Aluminiumfolie aufgetragen, wobei der Wärmeübergang durch die dunklen Farbpigmente verbessert wird und sich die beschichtete Aluminiumfolie besonders gut auch als Grillfolie eignet. Man erreicht sehr gute Haftung der Beschichtung an der Aluminiumfolie im Temperaturbereich zwischen 200 und 400 °C und eine Knitterbeständigkeit der Einheit aus Aluminiumfolie und Beschichtung. Die Aluminiumfolie weist beispielsweise eine Dicke von etwa 12µm auf und die Beschichtung weist eine Dicke von beispielsweise 1 bis 2 µm auf. Die Einheit aus Aluminiumfolie und Beschichtung kann dann zusammengeknüllt werden, ohne dass Beschichtung reißt oder abplatzt.

Ferner ist es möglich, dass die Aluminiumfolie mit einer Dicke von etwa 50 bis 100 µm, vorzugsweise 80µm mit der Beschichtung zur Herstellung einer Grillschale tiefgezogen wird. Bei einer solchen beschichteten Aluminiumfolie erfolgte nach 2h Kochtest kein Ablösen der Beschichtung. Weitere Tests haben ergeben, dass die Beschichtung wischbeständig (Nass- und Trocken) ist und eine hochglänzende Oberfläche aufweist.

Ferner können auch nicht schwarze Füllstoffe eingesetzt werden, um beliebige Farbtöne mit der Beschichtung erzeugen zu können.

Mit der vorliegenden Erfindung wird eine hochtemperaturstabile, emissionsfreie, dunkle, flexible und tiefziehfähige Wärmestrahlung absorbierende Oberfläche geschaffen, die auf Aluminiumfolien beschichtet werden kann und für den Einsatz im Lebensmittelbereich geeignet ist. Es können Aluminiumfolien beschichtet werden. Dabei ist bei dem Beschichtungsmaterial eine einer glasartige lebensmittelunbedenkliche Matrix mit organischer Flexibilisierung im Bereich < 25 Gew% gefüllt mit dunklen (bevorzugt schwarzen) lebensmittelrechtlich unbedenklichen Pigmente vorgesehen, die eine Schichtdicke von < 5 µm, insbesondere 0,4 µm bis 2 µm aufweist.

Das Bindemittel wird vorzugsweise aus Silanen mit vier hydrolysierbaren Gruppen und/oder Silanen mit 3 hydrolysierbaren Gruppen und einer Methylgruppe gebildet. Dabei ist ein Pigment bevorzugt Ruß in einer Konzentration von 5 -60 Gew% im Bindemittel dispergiert. Dabei ist kein Zusatz von Hilfsstoffen zur Dispergierung des Pigments sowie zum Verlauf des Beschichtungsmittels notwendig und die Beschichtung stellt auch einen guten Korrosionsschutz bereit.

Eine so beschichtete Aluminiumfolie zeigt bei Erhitzung keine Geruchsbildung oder Emission von schädlichen Gasen. Die Aluminiumfolie weist dabei eine Foliendicke zwischen 8 µm und 100 µm.

## Patentansprüche

1. Aluminiumfolie, insbesondere zur Verwendung zum Garen von Lebensmitteln, **dadurch gekennzeichnet, dass** ein Beschichtungsmaterial, insbesondere für hohe Temperaturen, mit einem Bindemittel und mindestens einem Füllstoff, das auf eine Metalloberfläche auftragbar ist, wobei das Bindemittel mindestens ein Siloxan mit einem organischen Restanteil von weniger als 25 Gew% aufweist, und das Siloxan oder die Siloxane dreifach und/oder vierfach vernetzt ist bzw. sind, an zumindest einer Seite der Aluminiumfolie vorgesehen ist.

2. Aluminiumfolie nach Anspruch 1, **dadurch gekennzeichnet, dass** das Beschichtungsmaterial für einen Temperaturbereich zwischen Raumtemperatur und 600°C, vorzugsweise zwischen 100°C und 400°C einsetzbar ist.

3. Aluminiumfolie nach einem der Anspruch 1 oder 2, **dadurch gekennzeichnet, dass** das Beschichtungsmaterial zusätzlich Kondensationskatalysatoren umfasst.

4. Aluminiumfolie nach einem der Ansprüche 1 bis 3, **dadurch gekennzeichnet, dass** das Beschichtungsmaterial in Form einer glasartigen Matrix vorliegt, die enthaltene Füllstoffe vor dem Verbrennen schützt

5. Aluminiumfolie nach einem der Ansprüche 1 bis 4, **dadurch gekennzeichnet, dass** das Bindemittel des Beschichtungsmaterials durch einen Sol-Gel Prozess unter Verwendung von tri- und tetrafunktionellen Silanen, wie z.B. Methyltriethoxysilan, Tetraethoxysilan, hergestellt wird.

6. Aluminiumfolie nach einem der Ansprüche 1 bis 5, **dadurch gekennzeichnet, dass** als Füllstoff des Beschichtungsmaterials Russ, Metallpartikel und/oder anorganische Farbpigmente, wie Eisenoxidschwarz, eingesetzt wird.

7. Aluminiumfolie nach einem der Ansprüche 1 bis 6, **dadurch gekennzeichnet, dass** als Lösungsmittel des Beschichtungsmaterials Ethanol und/oder Isopropanol enthalten sind.

8. Aluminiumfolie nach einem der Ansprüche 1 bis 7, **dadurch gekennzeichnet, dass** eine Beschichtung aus dem Beschichtungsmaterial nach einem der vorhergehenden Ansprüche gebildet ist.

9. Aluminiumfolie nach einem der Ansprüche 1 bis 8, **dadurch gekennzeichnet, dass** die Oberfläche der Beschichtung für verbesserte Antihafteigenschaften fluoriert ist und/oder mit Fluorkohlewasserstoffresten in Form von Fluorcarbonharzpartikeln gefüllt oder beschichtet ist.

10. Aluminiumfolie nach einem der Ansprüche 1 bis 9, **dadurch gekennzeichnet, dass** die Beschichtung durch Tauchen, Sprühen, mittels Rakel oder Walzen aufgebracht ist.

11. Aluminiumfolie nach einem der Ansprüche 1 bis 10, **dadurch gekennzeichnet, dass** die Beschichtung durch Wärmeeinwirkung im Bereich zwischen Raumtemperatur und 600 °C, vorzugsweise 130 °C bis 300 °C oder durch Infrarotstrahlung gehärtet ist.

12. Aluminiumfolie nach einem der Ansprüche 1 bis 11, **dadurch gekennzeichnet, dass** die Aluminiumfolie eine Dicke zwischen 9 µm und 20 µm besitzt und die Beschichtung um mehr als die Hälfte dünner, vorzugsweise in einem Bereich zwischen 250 nm und 3 µm, ausgebildet ist.

13. Aluminiumfolie nach einem der Ansprüche 1 bis 12, **dadurch gekennzeichnet, dass** die Beschichtungsmaterial wisch- und knitterbeständig mit der Aluminiumfolie verbunden ist.

14. Aluminiumfolie nach einem der Ansprüche 1 bis 13, **dadurch gekennzeichnet, dass** die Aluminiumfolie eine Dicke von 50 µm bis 100 µm aufweist und zu einer Grillschale tiefgezogen ist.

15. Aluminiumfolie nach einem der Ansprüche 1 bis 14, **dadurch gekennzeichnet, dass** die Beschichtung eine Dicke zwischen 100 nm und 5 µm, vorzugsweise 250 nm zwischen 3 µm aufweist.

16. Verfahren zur Herstellung einer Aluminiumfolie mit einer dunklen Oberfläche, mit den folgenden Schritten:
- Auftragen eines Beschichtungsmaterials nach einem der Ansprüche 1 bis 7 auf eine Aluminiumfolie, und
- Erhitzen der Aluminiumfolie mit dem Beschichtungsmaterials auf eine Temperatur von mindestens 180 °C, vorzugsweise etwa 220 °C, und Aushärten des Beschichtungsmaterials.

17. Verfahren nach Anspruch 16, **dadurch gekennzeichnet, dass** das Beschichtungsmaterial zunächst bei einer Temperatur zwischen 150 °C und 190 °C getrocknet und anschließend bei einer höheren Temperatur zwischen 180°C und 290°C gehärtet wird.

## Claims

1. Aluminium foil, particularly for use for cooking foodstuffs, **characterised in that** a coating material, particularly for high temperatures, with a binder and at least one filler, which can be coated on a metal surface, is provided on at least one side of the aluminium foil, wherein the binder comprises at least one siloxane with an organic residual component of less than 25 weight %, and the siloxane or siloxanes is or are triply and/or quardruply cross-linked.

2. Aluminium foil according to claim 1, **characterised in that** the coating material is usable for a temperature range between room temperature and 600° C, preferably between 100° C and 400° C.

3. Aluminium foil according to one of claims 1 and 2, **characterised in that** the coating material additionally comprises condensation catalysers.

4. Aluminium foil according to any one of claims 1 to 3, **characterised in that** the coating material is present in the form of a glass-like matrix, which protects included fillers from combustion.

5. Aluminium foil according to any one of claims 1 to 4, **characterised in that** the binder of the coating material is produced by a sol-gel process with use of trifunctional and tetrafunctional silanes such as, for example, methyltriethoxysilane and tetraethoxysilane.

6. Aluminium foil according to any one of claims 1 to 5, **characterised in that** carbon black, metal particles and/or inorganic colouring pigments, such as black iron oxide, is or are used as filler of the coating material.

7. Aluminium foil according to any one of claims 1 to 6, **characterised in that** ethanol and/or isopropanol is or are included as solvent of the coating material.

8. Aluminium foil according to any one of claims 1 to 7, **characterised in that** a coating of the coating material is formed according to any one of the preceding claims.

9. Aluminium foil according to any one of claims 1 to 8, **characterised in that** for improved non-stick characteristics the surface of the coating is fluorinated and/or filled or coated with fluorohydrocarbon residues in the form of fluorocarbon resin particles.

10. Aluminium foil according to any one of claims 1 to 9, **characterised in that** the coating is applied by dipping, spraying, by means of a doctor applicator or by means of rolling.

11. Aluminium foil according to any one of claims 1 to 10, **characterised in that** the coating is hardened by the action of heat in a range between room temperature and 600° C, preferably 130° C to 300° C, or by infrared radiation.

12. Aluminium foil according to any one of claims 1 to 11, **characterised in that** the aluminium foil has a thickness between 9 microns and 20 microns and the coating is formed to be thinner by more than a half, preferably in a range between 250 nanometres and 3 microns.

13. Aluminium foil according to any one of claims 1 to 12, **characterised in that** the coating material is wipe-resistantly and crease-resistantly connected with the aluminium foil.

14. Aluminium foil according to any one of claims 1 to 13, **characterised in that** the aluminium foil has a thickness of 50 microns to 100 microns and is deep-drawn to form a grilling tray.

15. Aluminium foil according to any one of claims 1 to 14, **characterised in that** the coating has a thickness between 100 nanometres and 5 microns, preferably 250 nanometres to 3 microns.

16. Method of producing an aluminium foil with a dark surface, comprising the following steps:
- coating a coating material according to any one of claims 1 to 7 on an aluminium foil and
- heating the aluminium foil with the coating material to a temperature of at least 180° C, preferably approximately 220° C, and hardening the coating material.

17. Method according to claim 16, **characterised in that** the coating material is initially dried at a temperature between 150° C and 190° C and is subsequently hardened at a higher temperature between 180° C and 290° C.

## Revendications

1. Feuille d'aluminium destinée en particulier à être utilisée pour permettre la cuisson de denrées alimentaires,
**caractérisée en ce qu'**
il est prévu sur au moins une face de cette feuille d'aluminium, un matériau de revêtement en particulier pour hautes températures renfermant un liant et au moins une charge qui peut être appliqué sur une surface métallique, le liant renfermant au moins un siloxane avec une fraction organique résiduelle de moins de 25 % en poids, et le siloxane ou les siloxanes étant réticulé(s) trois fois et/ou quatre fois.

2. Feuille d'aluminium conforme à la revendication 1,
**caractérisée en ce que**
le matériau de revêtement peut être mis en oeuvre dans une plage de température comprise entre la température ambiante et 600°C, de préférence entre 100°C et 400°C.

3. Feuille d'aluminium conforme à l'une des revendications 1 et 2,
**caractérisée en ce que**
le matériau de revêtement renferme en outre des catalyseurs de condensation.

4. Feuille d'aluminium conforme à l'une des revendications 1 à 3,
**caractérisée en ce que**
le matériau de revêtement se présente sous la forme d'une matrice vitreuse qui protège les charges contenues contre la brûlure.

5. Feuille d'aluminium conforme à l'une des revendications 1 à 4,
**caractérisée en ce que**
le liant du matériau de revêtement est obtenu par un procédé sol-gel en utilisant des silanes tri et tétra fonctionnels tels que par exemples du méthyl tri-éthoxy silane ou du tétra-éthoxy silane.

6. Feuille d'aluminium conforme à l'une des revendications 1 à 5,
**caractérisée en ce qu'**
en tant que charge du matériau de revêtement on met en oeuvre du noir de carbone, des particules métalliques et/ou des pigments colorés anorganiques tels que de l'oxyde noir de fer.

7. Feuille d'aluminium conforme à l'une des revendications 1 à 6,
**caractérisée en ce qu'**
en tant que solvant du matériau de revêtement on met en oeuvre un solvant renfermant de l'éthanol et/ ou de l'iso propanol.

8. Feuille d'aluminium conforme à l'une des revendications 1 à 7,
**caractérisée en ce qu'**
un revêtement est formé à partir du matériau de revêtement conforme à l'une des revendications précédentes.

9. Feuille d'aluminium conforme à l'une des revendications 1 à 8,
**caractérisée en ce que**
pour améliorer ses propriétés antiadhésives la surface du revêtement est fluorée et/ou est chargée ou revêtue de résidus d'hydrocarbures fluorés sous la forme de particules de résine fluoro-carbonée.

10. Feuille d'aluminium conforme à l'une des revendications 1 à 9,
**caractérisée en ce que**
le revêtement est appliqué par immersion, pulvérisation, au moyen de racles ou de rouleaux.

11. Feuille d'aluminium conforme à l'une des revendications 1 à 10,
**caractérisée en ce que**
le revêtement est durci sous l'effet de la chaleur dans la plage comprise entre la température ambiante et 600°C, de préférence entre 130°C et 300°C, ou par rayonnement infrarouge.

12. Feuille d'aluminium conforme à l'une des revendications 1 à 11,
**caractérisée en ce que**
la feuille d'aluminium présente une épaisseur comprise entre 9 µm et 20 µm et le revêtement est réalisé plus mince de plus d'une moitié, de préférence dans une plage comprise entre 250 nm et 3 µm.

13. Feuille d'aluminium conforme à l'une des revendications 1 à 12,
**caractérisée en ce que**
le matériau de revêtement est relié à la feuille d'aluminium de façon à résister à l'essuyage ou au froissage.

14. Feuille d'aluminium conforme à l'une des revendications 1 à 13,
**caractérisée en ce que**
la feuille d'aluminium présente une épaisseur de 50 µm à 100 µm et est emboutie pour former une coquille de grillage.

15. Feuille d'aluminium conforme à l'une des revendications 1 à 14,
**caractérisée en ce que**
le revêtement à une épaisseur comprise entre 100 nm et 5 µm, de préférence entre 250 nm et 3 µm.

16. Procédé d'obtention d'une feuille en aluminium ayant une surface sombre comportant les étapes consistant à :
- appliquer un matériau de revêtement conforme à l'une des revendications 1 à 7 sur une feuille d'aluminium, et
- chauffer cette feuille d'aluminium avec le matériau de revêtement à une température d'au moins 180°C, de préférence d'environ 220°C, et
- durcir le matériau de revêtement.

17. Procédé conforme à la revendication 16,
**caractérisé en ce que**
le matériau de revêtement est tout d'abord séché à une température comprise entre 150°C et 190°C puis est durci à une température supérieure comprise entre 180°C et 290°C.
